(19) **Europäisches Patentamt / European Patent Office / Office européen des brevets**

(11) **EP 4 675 303 A1**

(12) **EUROPEAN PATENT APPLICATION**
published in accordance with Art. 153(4) EPC

(43) Date of publication:
07.01.2026 Bulletin 2026/02

(21) Application number: 23927156.2

(22) Date of filing: 21.11.2023

(51) International Patent Classification (IPC):
*G01S 5/22* (2006.01)

(52) Cooperative Patent Classification (CPC):
**G05D 1/247;** G05D 2105/10; G05D 2107/29;
G05D 2109/15; G05D 2111/20

(86) International application number:
**PCT/CN2023/133042**

(87) International publication number:
**WO 2024/187815 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 10.03.2023 CN 202310231257

(71) Applicant: Wybotics Co., Ltd
Tianjin 300462 (CN)

(72) Inventors:
• WANG, Yueming
Tianjin 300462 (CN)
• CEN, Pu
Tianjin 300462 (CN)
• GUAN, Shouqiang
Tianjin 300462 (CN)
• LI, Cheng
Tianjin 300462 (CN)

(74) Representative: Winter, Brandl - Partnerschaft mbB
Alois-Steinecker-Straße 22
85354 Freising (DE)

(54) **POSITIONING METHOD AND SYSTEM FOR UNDERWATER CLEANING ROBOT, APPARATUS, AND STORAGE MEDIUM**

(57) The present disclosure provides a positioning method and system for an underwater cleaning robot, an apparatus, and a storage medium, and relates to the field of cleaning robots. The method includes: obtaining position information of the underwater cleaning robot relative to a base station; and determining a position of the underwater cleaning robot based on position information of a positioning sensor connected to the base station and the position information of the underwater cleaning robot relative to the base station. The method can improve the positioning accuracy of the underwater cleaning robot to a certain extent.

Obtain position information of the underwater cleaning robot relative to a base station — S201

Determine a position of the underwater cleaning robot based on position information of a positioning sensor connected to the base station and the position information of the underwater cleaning robot relative to the base station — S202

FIG. 2

EP 4 675 303 A1

**Description**

**CROSS REFERENCE TO RELATED APPLICATION**

The present disclosure claims priority to Chinese Patent Application No. 2023102312577, entiwy02tled "POSITIONING METHOD AND SYSTEM FOR UNDERWATER CLEANING ROBOT, APPARATUS, AND STORAGE MEDIUM" and filed on March 10, 2023, the entire contents of which are incorporated herein by reference.

**TECHNICAL FIELD**

The present disclosure relates to the field of cleaning robots, and more particularly, to a positioning method and system for an underwater cleaning robot, an apparatus, and a storage medium.

**BACKGROUND**

When cleaning swimming pools, cleaning robots send signals to ground detection apparatuses through underwater positioning apparatuses to obtain their position information relative to water surfaces in the swimming pools, and then the cleaning robots make path planning based on the position information, to achieve comprehensive cleaning of the swimming pools.

**SUMMARY**

Objectives of the present disclosure are to provide a positioning method and system for an underwater cleaning robot, an apparatus, and a storage medium, which can improve positioning accuracy of the underwater cleaning robot to a certain extent.

Other features and advantages of the present disclosure will become apparent from the following detailed description, or may be learned, in part, by practice of the present disclosure.

According to a first aspect of the present disclosure, there is provided a positioning method for an underwater cleaning robot. The method includes: obtaining position information of the underwater cleaning robot relative to a base station; and determining a position of the underwater cleaning robot based on position information of a positioning sensor connected to the base station and the position information of the underwater cleaning robot relative to the base station.

According to a second aspect of the present disclosure, there is provided a control method for an underwater cleaning robot. The control method includes: obtaining a position of the underwater cleaning robot through any one of the methods described above; sending a command to the underwater cleaning robot based on the position of the underwater cleaning robot, such that the underwater cleaning robot carries out path planning or changes an operating mode; or sending the position of the underwater cleaning robot to the underwater cleaning robot, such that the underwater cleaning robot operates autonomously.

According to a third aspect of the present disclosure, there is provided a positioning system for an underwater cleaning robot. The positioning system includes: a base station; a positioning sensor connected to the base station; and a controller communicatively connected to the base station. The controller is configured to perform the positioning method for an underwater cleaning robot as described in the first aspect.

According to a fourth aspect of the present disclosure, a control apparatus is provided, which includes a memory, a processor, and a computer program stored in the memory and executable on the processor. The computer program, when executed by a processor, causes the processor to perform the positioning method for an underwater cleaning robot as described in the first aspect.

According to a fifth aspect of the present disclosure, there is provided a computer-readable storage medium storing a computer program which, when executed by a processor, causes the processor to perform the positioning method for an underwater cleaning robot as described in the first aspect.

**BRIEF DESCRIPTION OF THE DRAWINGS**

The accompanying drawings herein are incorporated in and constitute a part of this specification, illustrate embodiments conforming to the present disclosure and together with the description, serve to explain the principles of the present disclosure. Apparently, the accompanying drawings in the following description are merely some embodiments of the present disclosure. To those of ordinary skills in the art, other accompanying drawings may also be derived from these accompanying drawings without creative efforts.

FIG. 1 shows a schematic diagram of application scenario of a positioning method for an underwater cleaning robot according to an embodiment of the present disclosure;

FIG. 2 shows a flowchart of the positioning method for an underwater cleaning robot according to an embodiment of the present disclosure;

FIG. 3 shows a flowchart of another positioning method for an underwater cleaning robot according to an embodiment of the present disclosure;

FIG. 4 shows a flowchart of still another positioning method for an underwater cleaning robot according to an embodiment of the present disclosure;

FIG. 5 shows a first schematic diagram of determining coordinates of a base station according to an embodiment of the present disclosure;

FIG. 6 shows a second schematic diagram of determining the coordinates of the base station according to an embodiment of the present disclosure;

FIG. 7 shows a schematic hyperbolic diagram according to an embodiment of the present disclosure;

FIG. 8 shows a schematic diagram of determining a position of the underwater cleaning robot according to an embodiment of the present disclosure;

FIG. 9 shows a schematic diagram of determining a position of another underwater cleaning robot according to an embodiment of the present disclosure;

FIG. 10 shows a schematic composition diagram of a positioning system for an underwater cleaning robot according to an embodiment of the present disclosure; and

FIG. 11 shows a block diagram of a control apparatus according to an embodiment of the present disclosure.

## DETAILED DESCRIPTION

To make the objectives, technical solutions and advantages of the present disclosure clearer, the embodiments of the present disclosure will be further described in detail below with reference to the accompanying drawings.

The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with some aspects related to the present disclosure as recited in the appended claims.

In the description of the present disclosure, it should be understood that the terms such as "first" and "second" are used only for purposes of description and should be understood as indicating or implying relative importance. The specific significations of the above terms in the present disclosure may be understood in the light of specific conditions by those of ordinary skills in the art. Furthermore, in the description of the present disclosure, unless otherwise specified, "a plurality of" refers to two or more. The "and/or" used for describing an association relationship between association objects represents presence of three relationships. For example, A and/or B may represent presence of the A only, presence of both the A and the B, and presence of the B only. Character "/" generally indicates that an "or" relationship is between the association objects.

In related technologies, common cleaning robots used for cleaning swimming pools are equipped with built-in lithium batteries, which can eliminate the need for cumbersome cables. However, due to the built-in lithium batteries, the cleaning robots cannot last for a long time. They must rely on their limited battery power to achieve maximum cleaning efficiency based on their positions in the swimming pools.

Currently, when cleaning the swimming pools, the cleaning robots send signals to ground detection apparatuses through underwater positioning apparatuses to obtain their position information relative to the water surfaces in the swimming pools, and then the cleaning robots make path planning based on the position information, to achieve comprehensive cleaning of the swimming pools.

However, when the cleaning robots send the signals to the ground detection apparatuses through the underwater positioning apparatuses, the underwater positioning apparatuses are greatly affected by fields due to sound multipath effects, resulting in larger result errors of the ground detection apparatuses and thus adversely affecting the path planning of the cleaning robots.

In response to the problems in the related technologies mentioned above, the present disclosure proposes a positioning method and system for an underwater cleaning robot, an apparatus, and a storage medium, which can improve positioning accuracy for the underwater cleaning robot at least to a certain extent.

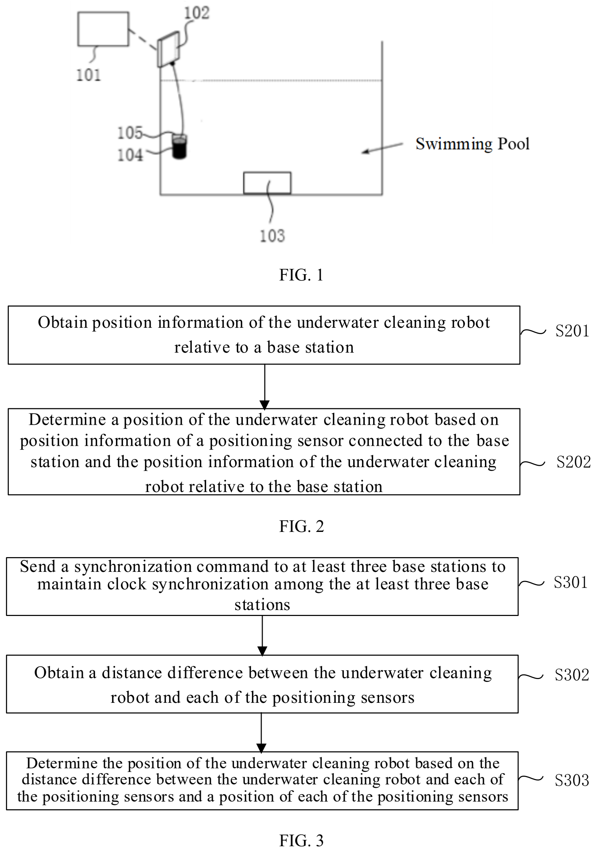

FIG. 1 shows a schematic diagram of application scenario of the positioning method for an underwater cleaning robot according to an embodiment of the present disclosure.

Referring to FIG. 1, the application scenario includes a controller 101, a base station 102, an underwater cleaning robot 103, a positioning sensor 104, and a depth sensor 105. The controller 101 may be a terminal device with computing and processing functions, which may be a desktop computer or laptop, etc. The positioning sensor 104 is an underwater acoustic sensor, and the depth sensor 105 is configured to detect an underwater depth value of the positioning sensor 104.

The controller is communicatively connected to the base station, the base station is connected to the positioning sensor, and the base station establishes communication with the underwater cleaning robot through the positioning sensor. When the underwater cleaning robot cleans a swimming pool, the controller obtains position information of the underwater cleaning robot relative to the base station, and obtains a position of the underwater cleaning robot based on position information of the positioning sensor connected to the base station and the position information of the underwater cleaning robot relative to the base station. That is, the controller can effectively improve accuracy of positioning the underwater cleaning robot by means of the position information of the positioning sensor and the position information of the base station relative to the underwater cleaning robot.

FIG. 2 shows a flowchart of the positioning method for an underwater cleaning robot according to an embodiment of the present disclosure. The positioning method for an underwater cleaning robot may be executed by a computing device with computing and processing functions, such as the controller 101 in the above application scenario. The positioning method for an underwater cleaning robot includes Steps S201 to S202. The positioning method for an underwater cleaning robot in the exemplary embodiment is described in detail below with reference to the accompanying drawings.

As shown in FIG. 2, in the Step S201, the position information of the underwater cleaning robot relative to the base station is obtained.

In some embodiments, the base station is a device positioned on the water surface, and can communicate with the underwater cleaning robot. The base station is powered by a battery or cable. When the base station is powered by the battery, charging methods include wired charging, solar charging, and wireless charging, etc.

In the Step S202, the position of the underwater cleaning robot is determined based on the position information of the positioning sensor connected to the base station and the position information of the underwater cleaning robot relative to the base station.

In some embodiments, the base station is positioned on the water surface, the positioning sensor is positioned underwater, the positioning sensor is connected to the base station, and the base station communicates with the underwater cleaning robot through the positioning sensor. That is, the base station performs underwater communication with the underwater cleaning robot via the positioning sensor correspondingly connected thereto, where the underwater communication includes at least one of acoustic communication, optical signal communication, and electromagnetic communication. In the embodiments of the present disclosure, a description is made by taking an example where the underwater communication is the acoustic communication.

In some embodiments, at least two base stations are comprised; and before the controller obtains the position information of the underwater cleaning robot relative to the base station, the method also includes: controlling the at least two base stations to maintain clock synchronization. For example, a synchronization command is sent to the at least two base stations via wireless communication to maintain clock synchronization between the at least two base stations. Alternatively, the synchronization command is sent to the at least two base stations via ultrasonic communication to maintain clock synchronization between the at least two base stations. The controller maintains clock synchronization between the at least two base stations via wireless communication, which can avoid time errors caused by clock asynchronization between the base stations, can obtain more accurate data, and can improve the accuracy of positioning the underwater cleaning robot to a certain extent.

Each base station is separately connected to at least one positioning sensor, and in some embodiments, each base station is separately connected to one positioning sensor. The position information of the positioning sensor is the position information of the positioning sensor positioned in the water. The position information of the underwater cleaning robot relative to the base station includes a distance between the underwater cleaning robot and each of the positioning sensors, or a distance difference between the underwater cleaning robot and each of the positioning sensors. In some other embodiments, each base station is connected to two positioning sensors, and the controller can obtain the distance or distance difference between either one of the two positioning sensors and the underwater cleaning robot. In addition, in some embodiments, the positioning sensor is an underwater acoustic sensor, and the underwater cleaning robot is connected to the underwater acoustic sensor. The underwater cleaning robot communicates with the underwater acoustic sensor connected to the base station via an underwater acoustic signal by means of the underwater acoustic sensor.

According to the technical solutions in the exemplary embodiment of FIG. 2, the controller obtains the position information of the underwater cleaning robot relative to the base station, and obtains the position of the underwater cleaning robot based on the position information of the positioning sensor connected to the base station and the position information of the underwater cleaning robot relative to the base station. That is, the controller can obtain the highly accurate position of the underwater cleaning robot based on the position information of the positioning sensor and the position information of the base station relative to the underwater cleaning robot.

To provide a clearer explanation of the above exemplary implementation, the above implementation will be described below in two cases.

In the first case, the position information of the underwater cleaning robot relative to the base station includes the distance difference between the underwater cleaning robot and each of the positioning sensors. The controller determines the position of the underwater cleaning robot based on the position information of the positioning sensor connected to the base station and the distance difference between the underwater cleaning robot and each of the positioning sensors.

Specifically, as shown in FIG. 3, in the Step S301, the synchronization command is sent to at least three of the base stations to maintain clock synchronization among the at least three base stations.

In some embodiments, for example, when there are four base stations, i.e. a first base station, a second base station, a third base station, and a fourth base station, the controller sends the synchronization command to the first base station, the second base station, the third base station, and the fourth base station to maintain clock synchronization among the four base stations.

In the Step S302, the controller obtains the distance difference between the underwater cleaning robot and each of the positioning sensors.

In some embodiments, in combination with the above embodiments, all the four base stations are connected to the positioning sensors through wires, and obtaining the distance difference between the underwater cleaning robot and each of the positioning sensors includes: obtaining a timestamp at which each of the positioning sensors respectively receives an underwater acoustic signal sent by the underwater cleaning robot or a timestamp at which the underwater cleaning robot receives an underwater acoustic signal sent by each of the positioning sensors; determining a time difference required for performing underwater acoustic communication between the underwater cleaning robot and each of the positioning sensors based on each of the timestamps obtained; and determining the distance difference between the underwater cleaning robot and each of the positioning sensors based on the time difference required for performing underwater acoustic communication between the underwater cleaning robot and each of the positioning sensors and underwater propagation speed of the underwater acoustic signal.

In some embodiments, the base stations record the a timestamp at which each of the positioning sensors respectively receives the underwater acoustic signal sent by the underwater cleaning robot, and the controller obtains the timestamps from each of the base station, and then calculates the time difference required for performing underwater acoustic communication between the underwater cleaning robot and each of the positioning sensors based on the timestamps. Finally, the distance difference between the underwater cleaning robot and each of the positioning sensors is obtained by multiplying the time difference required for performing underwater acoustic communication between the underwater cleaning robot and each of the positioning sensors with the underwater propagation speed of the underwater acoustic signal. The underwater propagation speed of the underwater acoustic signal is 1,500 m/s.

In some other embodiments, the underwater cleaning robot is connected to the underwater acoustic sensor, and the underwater cleaning robot communicates with the underwater acoustic sensor connected to the base station via the underwater acoustic signal by means of the underwater acoustic sensor. The underwater cleaning robot receives the a timestamp at which each of the positioning sensors respectively sends the underwater acoustic signal. The controller calculates the time difference required for performing underwater acoustic communication between the underwater cleaning robot and each of the positioning sensors based on the timestamps obtained. Finally, the distance difference between the underwater cleaning robot and each of the positioning sensors is obtained by multiplying the time difference required for performing underwater acoustic communication between the underwater cleaning robot and each of the positioning sensors with the underwater propagation speed of the underwater acoustic signal.

In the Step S303, the controller determines the position of the underwater cleaning robot based on the distance difference between the underwater cleaning robot and each of the positioning sensors and the position of each of the positioning sensors.

In some embodiments, in combination with the above embodiments, determining the position of the underwater cleaning robot based on the distance difference between the underwater cleaning robot and each of the positioning sensors and the position of each of the positioning sensors specifically includes: obtaining position coordinates of each of the positioning sensors; and determining position coordinates or relative position coordinates of the underwater cleaning robot based on the distance difference between the underwater cleaning robot and each of the positioning sensors and the position of each of the positioning sensors by means of a TDOA (Time Difference of Arrival) model.

That is, in some embodiments, obtaining the position coordinates of each of the positioning sensors includes: obtaining depth coordinate values of each of the positioning sensors; obtaining two-dimensional coordinate values of each of the positioning sensors based on two-dimensional position coordinates of each of the base stations and a relative position between each of the base stations and the corresponding positioning sensor; and obtaining three-dimensional position coordinates of each of the positioning sensors based on the depth coordinate values of each of the positioning sensors and the two-dimensional coordinate values of each of the positioning sensors.

It is to be understood that a depth sensor is connected directly below the base station, where the depth sensor is configured to measure underwater depth of the positioning sensor. The base station records a measurement value of the depth sensor, and the controller obtains the depth coordinate values of each positioning sensor through the base station. The controller corresponds the depth coordinate values of each positioning sensor with the two-dimensional coordinate values of each base station, to obtain the three-dimensional position coordinates of each positioning sensor.

Obtaining the two-dimensional position coordinate values of each of the positioning sensors includes: obtaining spatial transmission delay between every two of the base stations; obtaining a distance between every two of the base stations based on the spatial transmission delay and airborne propagation speed of an electromagnetic wave; and determining the two-dimensional coordinates of each of the base stations based on the distance between every two of the base stations, a two-dimensional coordinate system established for each of the base stations, and coordinates or reference coordinates of a certain base station.

Obtaining the spatial transmission delay between every two of the base stations specifically includes: (i) maintaining clock synchronization for each of the base stations; and obtaining the spatial transmission delay between every two of the base stations by means of timestamps for signal interaction between every two of the base stations; or (ii) obtaining a timestamp T1 when a base station A sends an underwater acoustic signal to a base station B, a timestamp T2 when the base station B receives the underwater acoustic signal sent by the base station A, a timestamp T3 when the base station B sends the underwater acoustic signal to the base station A, and a timestamp T4 when the base station A receives the underwater acoustic signal sent by the base station B, and obtaining spatial transmission delay between the base station A and the base station B; and similarly obtaining spatial transmission delay between other every two of the base stations.

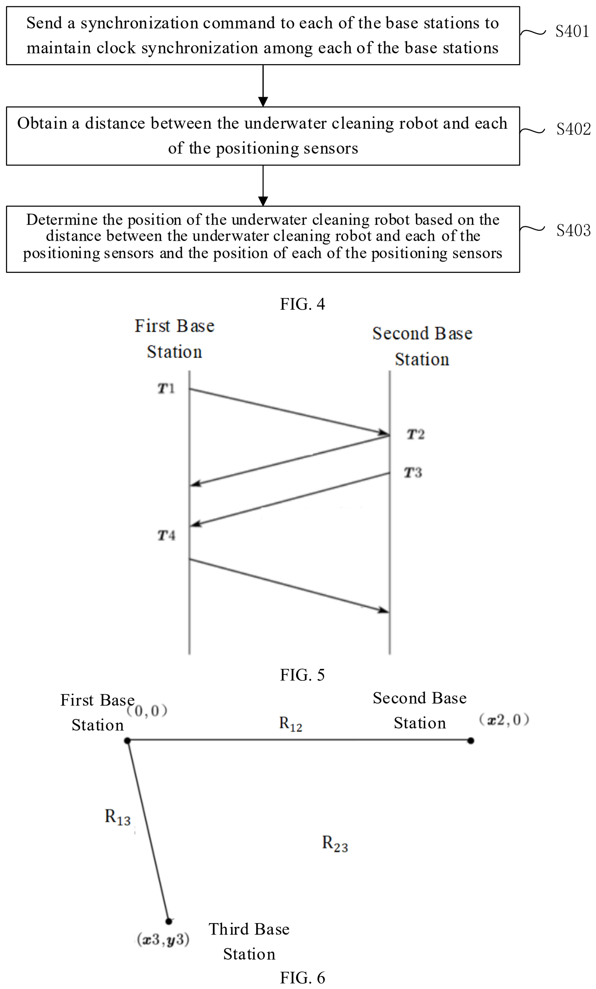

For example, in combination with the above embodiments, there are four base stations, namely the first base station, the second base station, the third base station, and the fourth base station, where the base station A represents the first base station, and the base station B represents the second base station. Referring to FIG. 5 and FIG. 6, the timestamp when the first base station sends a signal is represented as T1, the timestamp when the second base station receives a signal is represented as T2, the timestamp when the second base station sends a signal is represented as T3, and the timestamp when the first base station receives a signal is represented as T4. The spatial transmission delay is represented as DELAY, and clock offset between the first base station and the second base station is represented as OFFSET. The distance between the first base station and the second base station is represented as $R_{12}$, and airborne propagation speed of the electromagnetic wave is $3*10^8$m/s. The distance $R_{12}$ between the first base station and the second base station is determined based on the following formulae (1) and (2):

$$R_{12}=DELAY*3*10^8 m/s \qquad (1)$$

$$DELAY=\frac{(T4+T2)-(T1+T3)}{2} \qquad (2)$$

Based on the same method as described above, the distance $R_{13}$ between the first base station and the third base station can be obtained, and the distance $R_{23}$ between the second base station and the third base station, can be obtained.

A coordinate system is established based on the distance $R_{12}$ between the first base station and the second base station, the distance $R_{13}$ between the first base station and the third base station, and the distance $R_{23}$ between the second base station and the third base station. Assuming the coordinates of the first base station are (0, 0), the coordinates $(x_2, 0)$ of the neighboring second base station and the coordinates $(x_3, y_3)$ of the third base station are selected to establish the following equation set (3):

$$x_3^2 + y_3^2 = TR_{13}^2$$
$$(x_3 - x_2)^2 + y_3^2 = TR_{23}^2$$
$$x_2 = TR_{12} \qquad (3)$$

Finally, based on the relative positions of the second base station, the third base station, and the first base station, one solution is eliminated to obtain the coordinates of the second base station and the third base station. A method for solving the coordinates of the fourth base station is consistent with the method for solving the coordinates of the third base station, and thus is not to be described in detail here.

Next, the control determines the position coordinates or relative position coordinates of the underwater cleaning robot based on the distance difference between the underwater cleaning robot and each of the positioning sensors and the position of each of the positioning sensors by means of the TDOA model.

That is, based on the above embodiments, assuming that the positions of the four base stations are $(x_1,y_1)$, $(x_2, y_2)$, $(x_3,y_3)$, and $(x_4,y_4)$, respectively, the positions of the four positioning sensors are $(x_1,y_1,z_1)$, $(x_2,y_2,z_2)$, $(x_3,y_3,z_3)$, and

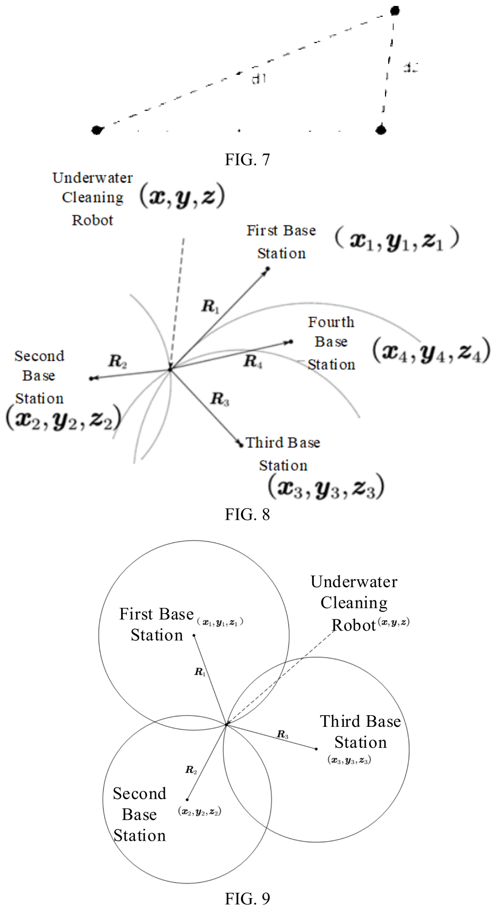

$(x_4, y_4, z_4)$, respectively, where $z_1, z_2, z_3$, and $z_4$ represent the depth values measured by the corresponding depth sensors. Referring to FIG. 7 and FIG. 8, there is a time difference when the underwater acoustic signal of the underwater cleaning robot is sent to the four positioning sensors, and the position of the underwater cleaning robot is positioned by means of the TDOA model, which is mainly used to measure the time differences when the signal reaches different reference nodes. Multiple sets of time differences may be obtained through interaction, and it is not required to know exact signal arrival time. A measured target is positioned through an intersection points of a plurality of TDOA hyperbolas.

Referring to FIG. 7, the TDOA hyperbola is defined as a locus of points in a plane where an absolute value of difference in distances to two fixed points F1 and F2 equals a constant 2a. Coordinates of the two fixed points F1 and F2 are (- c, 0) and (c, 0), supposing coordinates of Point A are (x, y):

according to the definition, it may be obtained $|d_1\text{-}d_2| = 2\alpha$, that is

$$\left| \sqrt{(x+c)^2 + y^2} - \sqrt{(x-c)^2 + y^2} \right| = 2a$$

Referring to FIG. 8, using the TDOA hyperbola and the TDOA model, any two base stations serve as foci (+ c, 0) of the hyperbola, and the difference in distances between the corresponding two base stations and the underwater cleaning robot serves as a long axis 2a, the intersection point obtained is the coordinate of the underwater cleaning robot. That is, four base stations that are not on a straight line may determine three hyperbolas, and the intersection point of these three hyperbolas is the coordinate of the underwater cleaning robot, which is the point to be measured $(x, y, z)$ in the figure. In combination with the above embodiments, the following formulas (4) to (6) may be established:

$$\begin{aligned}
\sqrt{(x-x_1)^2 + (y-y_1)^2 + (z-z_1)^2} &= R_1 \\
\sqrt{(x-x_2)^2 + (y-y_2)^2 + (z-z_2)^2} &= R_2 \\
\sqrt{(x-x_3)^2 + (y-y_3)^2 + (z-z_3)^2} &= R_3 \\
\sqrt{(x-x_4)^2 + (y-y_4)^2 + (z-z_4)^2} &= R_4
\end{aligned} \tag{4}$$

where $R_1$, $R_2$, $R_3$, and $R_4$ represent the distances from the underwater cleaning robots to the four positioning sensors.

$$\begin{aligned}
R_2 - R_1 &= R_{21} \\
R_3 - R_1 &= R_{31} \\
R_4 - R_1 &= R_{41}
\end{aligned} \tag{5}$$

where , $R_{21}$, $R_{31}$ , and $R_{41}$ represent the distance differences between the underwater cleaning robot and the three positioning sensors.

$$\begin{aligned}
R_{21} &= \Delta T_{21} * V_{sound\ speed} = (T_2 - T_1) * V_{sound\ speed} \\
R_{31} &= \Delta T_{31} * V_{sound\ speed} = (T_3 - T_1) * V_{sound\ speed_1} \quad (6) \\
R_{41} &= \Delta T_{41} * V_{sound\ speed} = (T_4 - T_1) * V_{sound\ speed_1}
\end{aligned}$$

where T1, T2, T3, and T4 respectively represent time when the underwater cleaning robot sends the underwater acoustic signal to each of the positioning sensors under the premise that the first base station, the second base station, the third base station, and the fourth base station maintain clock synchronization, i.e., communication time when the underwater cleaning robot sends the underwater acoustic signal to each of the positioning sensors. Finally, the coordinates $(x, y, z)$ of the underwater cleaning robot may be obtained by solving the equations (4) to (6).

According to the technical solutions in the exemplary embodiment of FIG. 3, the controller sends the synchronization command to at least three of the base stations to maintain clock synchronization among the at least three base stations. The controller obtains the distance difference between the underwater cleaning robot and each of the positioning sensors, and determines the position of the underwater cleaning robot based on the distance difference between the underwater cleaning robot and each of the positioning sensors and the position of each of the positioning sensors. In one aspect, the controller automatically obtains the position information of each base station on the water surface based on interactive communication between every two base stations on the water surface, and then obtains the position of the positioning sensor positioned underwater, without the need for manual input by users. In this way, the accuracy of positioning the underwater cleaning robot is further improved. In another aspect, the controller obtains the distance difference between the underwater cleaning robot and each of the positioning sensors, and calculates the position of the underwater cleaning robot using the TDOA model, which can reduce factors that cause errors and thus improve the accuracy of positioning the underwater cleaning robot to a certain extent.

In the second case, the position information of the underwater cleaning robot relative to the base station includes the distance between the underwater cleaning robot and each of the positioning sensors. The controller determines the position of the underwater cleaning robot based on the position information of the positioning sensor connected to the base station and the distance between the underwater cleaning robot and each of the positioning sensors.

In the first method, for example, when there are two base stations, i.e. a base station A and a base station B, the controller maintains clock synchronization between the base station A and the base station B via wireless communication. The controller obtains the distance between the base station A and the base station B, and obtains the position information of the underwater cleaning robot relative to the base station A and the position information of the underwater cleaning robot relative to the base station B. The position information in the embodiments of the present disclosure is angle information. Next, the position of the underwater cleaning robot is measured using trigonometric function relationships.

In the second method, referring to FIG. 4, in the Step S401, the synchronization command is sent to each of the base stations to maintain clock synchronization among the base stations.

In some embodiments, assuming three base stations are provided, i.e. the first base station, the second base station, and the third base station, the controller sends the synchronization command to the first base station, the second base station, and the third base station to maintain clock synchronization among the three base stations.

In the Step S402, the controller obtains the distance between the underwater cleaning robot and each of the positioning sensors.

In some embodiments, obtaining the distance between the underwater cleaning robot and each of the positioning sensors specifically includes: obtaining transmission time required for performing underwater communication between the underwater cleaning robot and each of the base stations; and determining the distance between the underwater cleaning robot and each of the positioning sensors based on the time required for performing underwater acoustic communication between the underwater cleaning robot and each of the base stations and the underwater propagation speed of an underwater acoustic signal.

Obtaining the transmission time required for performing underwater communication between the underwater cleaning robot and each of the base stations specifically includes: obtaining transmission time based on communication between the underwater cleaning robot and each of the base stations, the communication carrying sending timestamp information and receiving timestamp information; and determining spatial transmission time between each of the base stations and the underwater cleaning robot. In some embodiments, when the underwater cleaning robot synchronizes with each of the base stations: the underwater cleaning robot simultaneously sends a signal carrying a sending timestamp T1, and after receiving the signal, each of the base stations records a timestamp T2i received, i representing a base station code; or each of the base stations simultaneously sends a signal carrying a sending timestamp T1, and after receiving the signal, the underwater cleaning robot records a timestamp T2i received, i representing the base station code.

In some other embodiments, when the underwater cleaning robot does not synchronize with each of the base stations: each of the base stations simultaneously sends a signal carrying the sending timestamp T1 to the underwater cleaning robot, after receiving the signal from each of the base stations, the underwater cleaning robot records the timestamp T2i received, i representing the base station code; the underwater cleaning robot simultaneously sends a signal carrying a sending timestamp T3 to each of the base stations, and each of the base stations respectively receives the signal sent by the underwater cleaning robot and records a timestamp T4i, i representing the base station code; or the underwater cleaning robot simultaneously sends a signal carrying the sending timestamp T1 to each of the base stations, and after receiving the signal sent by the underwater cleaning robot, each of the base stations records the timestamp T2i received, i representing the base station code; each of the base stations simultaneously sends a signal carrying the sending timestamp T3 to the underwater cleaning robot, and the underwater cleaning robot receives the signal sent by each of the base stations and records the timestamp T4i, i representing the base station code; and the spatial transmission time between each of the base stations and the underwater cleaning robot is determined.

In the Step S403, the controller determines the position of the underwater cleaning robot based on the distance between the underwater cleaning robot and each of the positioning sensors and the position of each of the positioning sensors.

In some embodiments, determining the position of the underwater cleaning robot based on the distance between the underwater cleaning robot and each of the positioning sensors and the position of each of the positioning sensors specifically includes: obtaining position coordinates of each of the positioning sensors; and determining position coordinates of the underwater cleaning robot based on the distance between the underwater cleaning robot and each of the positioning sensors and the position of each of the positioning sensors by means of a TOA (Time of Arrival) model.

Obtaining the position coordinates of each of the positioning sensors includes: obtaining depth coordinate values of each of the positioning sensors; determining two-dimensional coordinate values of each of the positioning sensors based on two-dimensional position coordinates of each of the base stations and a relative position between each of the base stations and the corresponding positioning sensor; and determining three-dimensional position coordinates of each of the positioning sensors based on the depth coordinate values of each of the positioning sensors and the two-dimensional coordinate values of each of the positioning sensors.

That is, obtaining the two-dimensional position coordinates of each of the base stations includes: obtaining spatial transmission delay between every two of the base stations; and obtaining a distance between every two of the base stations based on the spatial transmission delay and airborne propagation speed of an electromagnetic wave.

It should be noted that the above embodiments have already explained how the controller obtains the spatial transmission delay between every two of the base stations and determines the two-dimensional coordinate values and the three-dimensional position coordinates of each of the positioning sensors, and thus the embodiments of the present disclosure do not provide a detailed description.

To further explain the above contents, a description is made by taking an example where three base stations are provided. In combination with the above embodiments, the two-dimensional coordinates of the first base station, the second base station, and the third base station are obtained through the above embodiments, which are $(x_1, y_1)$, $(x_2, y_2)$ and $(x_3, y_3)$, respectively. Therefore, the positions of the three positioning sensors are $(x_1, y_1, z_1)$, $(x_2, y_2, z_2)$, and $(x_3, y_3, z_3)$, respectively, where $z_1, z_2$, and $z_3$ represent the corresponding depth values measured by the depth sensors. The controller obtains the distance between the underwater cleaning robot and each of the positioning sensors based on the time required for performing underwater acoustic communication between the underwater cleaning robot and each of the base stations and the underwater propagation speed of an underwater acoustic signal. That is, the distance between the underwater cleaning robot and the first base station is $R_1$, the distance between the underwater cleaning robot and the second base station is $R_2$, and the distance between the underwater cleaning robot and the third base station is $R_3$. Next, a circle is drawn by taking the first base station as a center of the circle and $R_1$ as a radius of the circle, a circle is drawn by taking the second base station as a center of the circle and $R_2$ as a radius of the circle, and a circle is drawn by taking the third base station as a center of the circle and $R_3$ as a radius of the circle, to obtain three circles as shown in FIG. 9. The following equation (7) is derived by means of the TOA model. By solving the equation (7), the position $(x,y,z)$ of the underwater cleaning robot is obtained.

$$(x - x_1)^2 + (y - y_1)^2 + (z - z_1)^2 = R_1^2$$
$$(x - x_2)^2 + (y - y_2)^2 + (z - z_2)^2 = R_2^2$$
$$(x - x_3)^2 + (y - y_3)^2 + (z - z_3)^2 = R_3^2 \tag{7}$$

It should be noted that the first base station, the second base station, and the third base station are not on the same straight line. Based on the relative position relationship between the first base station, the second base station, and the third base station and the underwater cleaning robot, it is determined that the position of the underwater cleaning robot is at the intersection point of the three circles.

According to the technical solutions in the exemplary embodiment of FIG. 4, the controller sends the synchronization command to at least two of the base stations to maintain clock synchronization between the at least two base stations. The controller obtains the distance between the underwater cleaning robot and each of the positioning sensors, and determines the position of the underwater cleaning robot based on the distance between the underwater cleaning robot and each of the positioning sensors and the position of each of the positioning sensors. The controller calculates the position of the underwater cleaning robot by means of the TDOA model, which can reduce factors that cause errors and thus improve the accuracy of positioning the underwater cleaning robot to a certain extent.

In addition, the present disclosure also provides a control method for an underwater cleaning robot. After obtaining the position of the underwater cleaning robot, the controller sends a command to the underwater cleaning robot based on the position of the underwater cleaning robot, such that the underwater cleaning robot carries out path planning or changes an operating mode, or the controller sends the position information to the underwater cleaning robot, such that the underwater cleaning robot operates autonomously. That is, after determining the position of the underwater cleaning robot, the controller sends the command to the underwater cleaning robot, such that the underwater cleaning robot carries out path planning or changes the operating mode, which improves the cleaning efficiency to a certain extent. Alternatively, after determining the position of the underwater cleaning robot, the controller directly sends the position information to the underwater cleaning robot, such that the underwater cleaning robot operates autonomously based on its own position in the swimming pool.

The following embodiments are apparatus embodiments of the present disclosure, which may be used for executing the method embodiments of the present disclosure. Reference is made to the method embodiments of the present disclosure for undisclosed details about the apparatus embodiments of the present disclosure.

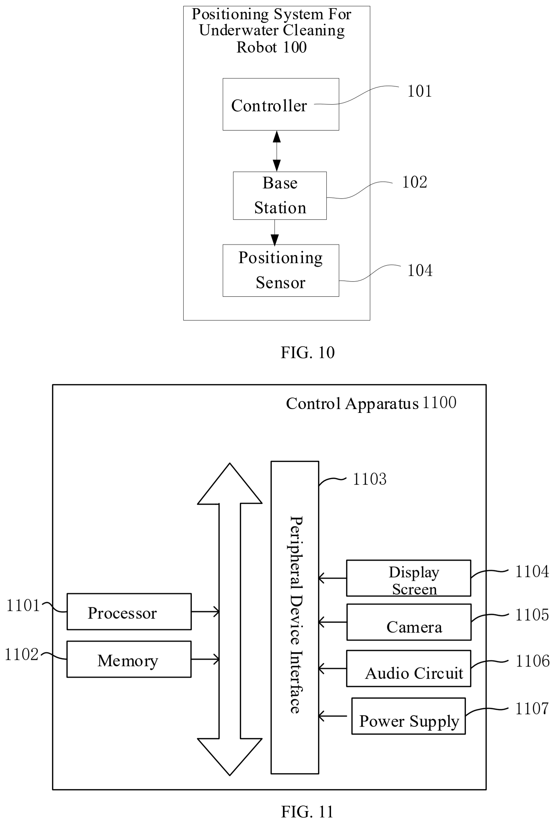

FIG. 10 shows a schematic composition diagram of a positioning system for an underwater cleaning robot according to an embodiment of the present disclosure.

The positioning system 100 for the underwater cleaning robot in the embodiments of the present disclosure includes: a base station 102; a positioning sensor 104 connected to the base station 102; and a controller 101 communicatively connected to the base station 102.

In some embodiments, the positioning system 100 also includes: at least two base stations or at least three base stations, each of which being positioned on a water surface and being connected to a corresponding positioning sensor located underwater; and a controller communicatively connected to each of the base stations. The controller is configured to obtain the position information of the underwater cleaning robot relative to the base station, and determine the position of the underwater cleaning robot based on the position information of the positioning sensor connected to the base station and the position information of the underwater cleaning robot relative to the base station.

Alternatively, the controller 101 is also configured to control the at least two base stations to maintain clock synchronization. For example, the controller 101 sends the synchronization command to the at least two base stations via wireless communication to maintain clock synchronization between the at least two base stations. Alternatively, the controller 101 sends the synchronization command to the at least two base stations via ultrasonic communication to maintain clock synchronization between the at least two base stations.

Alternatively, the controller 101 is also configured to: send the synchronization command to the at least three base stations to maintain clock synchronization among the at least three base stations; obtain the distance difference between the underwater cleaning robot and each of the positioning sensors; and determine the position of the underwater cleaning robot based on the distance difference between the underwater cleaning robot and each of the positioning sensors and the position of each of the positioning sensors.

Alternatively, the controller 101 is also configured to: obtain a timestamp at which each of the positioning sensors respectively receives an underwater acoustic signal sent by the underwater cleaning robot or a timestamp at which the underwater cleaning robot receives an underwater acoustic signal sent by each of the positioning sensors; determine a time difference required for performing underwater acoustic communication between the underwater cleaning robot and each of the positioning sensors based on each of the timestamps obtained; and determine the distance difference between the underwater cleaning robot and each of the positioning sensors based on the time difference required for performing underwater acoustic communication between the underwater cleaning robot and each of the positioning sensors and underwater propagation speed of the underwater acoustic signal.

Alternatively, the controller 101 is also configured to: obtain position coordinates of each of the positioning sensors; and determine position coordinates or relative position coordinates of the underwater cleaning robot based on the distance difference between the underwater cleaning robot and each of the positioning sensors and the position of each of the positioning sensors by means of the TDOA model.

Alternatively, the controller 101 is also configured to: send the synchronization command to each of the base stations to maintain clock synchronization among the base stations; obtain the distance between the underwater cleaning robot and each of the positioning sensors; and determine the position of the underwater cleaning robot based on the distance between the underwater cleaning robot and each of the positioning sensors and the position of each of the positioning sensors.

Alternatively, the controller 101 is also configured to: obtain transmission time required for performing underwater communication between the underwater cleaning robot and each of the base stations; and determine the distance between the underwater cleaning robot and each of the positioning sensors based on the time required for performing underwater acoustic communication between the underwater cleaning robot and each of the base stations and the underwater propagation speed of an underwater acoustic signal.

Alternatively, the controller 101 is also configured to obtain transmission time based on communication between the underwater cleaning robot and each of the base stations, the communication carrying sending timestamp information and receiving timestamp information. (i) When the underwater cleaning robot synchronizes with each of the base stations:

the underwater cleaning robot simultaneously sends a signal carrying a sending timestamp T1, and after receiving the signal, each of the base stations records a timestamp T2i received, i representing a base station code; or each of the base stations simultaneously sends a signal carrying a sending timestamp T1, and after receiving the signal, the underwater cleaning robot records a timestamp T2i received, i representing the base station code. Spatial transmission time between each of the base stations and the underwater cleaning robot is determined. (ii) When the underwater cleaning robot does not synchronize with each of the base stations: each of the base stations simultaneously sends a signal carrying the sending timestamp T1 to the underwater cleaning robot, after receiving the signal from each of the base stations, the underwater cleaning robot records the timestamp T2i received, i representing the base station code; the underwater cleaning robot simultaneously sends a signal carrying a sending timestamp T3 to each of the base stations, and each of the base stations respectively receives the signal sent by the underwater cleaning robot and records a timestamp T4i, i representing the base station code; or the underwater cleaning robot simultaneously sends a signal carrying the sending timestamp T1 to each of the base stations, and after receiving the signal sent by the underwater cleaning robot, each of the base stations records the timestamp T2i received, i representing the base station code; each of the base stations simultaneously sends a signal carrying the sending timestamp T3 to the underwater cleaning robot, and the underwater cleaning robot receives the signal sent by each of the base stations and records the timestamp T4i, i representing the base station code. Spatial transmission time between each of the base stations and the underwater cleaning robot is determined.

Alternatively, the controller 101 is also configured to: obtain position coordinates of each of the positioning sensors; and determine position coordinates of the underwater cleaning robot based on the distance between the underwater cleaning robot and each of the positioning sensors and the position of each of the positioning sensors by means of the TDOA model.

Alternatively, the controller 101 is also configured to: obtain depth coordinate values of each of the positioning sensors; determine two-dimensional coordinate values of each of the positioning sensors based on two-dimensional position coordinates of each of the base stations and a relative position between each of the base stations and the corresponding positioning sensor; and determine three-dimensional position coordinates of each of the positioning sensors based on the depth coordinate values of each of the positioning sensors and the two-dimensional coordinate values of each of the positioning sensors.

Alternatively, the controller 101 is also configured to: obtain spatial transmission delay between every two of the base stations; obtain a distance between every two of the base stations based on the spatial transmission delay and airborne propagation speed of the electromagnetic wave; and determine the two-dimensional coordinates of each of the base stations based on the distance between every two of the base stations, a two-dimensional coordinate system established for each of the base stations, and coordinates or reference coordinates of a certain base station.

Alternatively, the controller 101 is also configured to: (i) maintain clock synchronization for each of the base stations; and obtain the spatial transmission delay between every two of the base stations by means of timestamps for signal interaction between every two of the base stations; or (ii) obtain a timestamp T1 when a base station A sends an underwater acoustic signal to a base station B, a timestamp T2 when the base station B receives the underwater acoustic signal sent by the base station A, a timestamp T3 when the base station B sends the underwater acoustic signal to the base station A, and a timestamp T4 when the base station A receives the underwater acoustic signal sent by the base station B, and obtain spatial transmission delay between the base station A and the base station B; and similarly obtain spatial transmission delay between other every two of the base stations.

Alternatively, the controller 101 is also configured to: send the command to the underwater cleaning robot based on the position of the underwater cleaning robot, such that the underwater cleaning robot carries out path planning or changes an operating mode; or send the position of the underwater cleaning robot to the underwater cleaning robot, such that the underwater cleaning robot operates autonomously.

It should be noted that the positioning system for the underwater cleaning robot provided in the above embodiment belongs to the same conception as the embodiments of the positioning method for an underwater cleaning robot. Therefore, reference is made to the embodiments of the positioning method for an underwater cleaning robot described above for details not disclosed in the apparatus embodiments of the present disclosure, which are not to be described in detail here.

Sequence numbers of the embodiments of the present disclosure are merely for description, and do not represent advantages or disadvantages of the embodiments.

The embodiments of the present disclosure also provide a computer-readable storage medium storing a computer program which, when executed by a processor, causes the processor to perform the steps of the method in any one of the aforementioned embodiments. The computer-readable storage medium may include, but is not limited to any type of disks, including floppy disks, optical disks, DVD, CD-ROM, microdrives and magnetooptical disks, ROM, RAM, EPROM, EEPROM, DRAM, VRAM, flash memory devices, magnetic or optical cards, nanosystems (including molecular memory ICs), or any type of media or devices suitable for storing commands and/or data.

The embodiments of the present disclosure also provide a control apparatus comprising a memory, a processor, and a computer program stored on the memory and executable on the processor. When the processor executes the program, the steps of the method in any one of the aforementioned embodiments are performed.

FIG. 11 shows a structural diagram of the control apparatus according to an embodiment of the present disclosure. As shown in FIG. 11, the control apparatus 1100 includes a processor 1101 and a memory 1102.

In the embodiments of the present disclosure, the processor 1101 is a control center of a computer system, which may be a processor of a physical machine or a processor of a virtual machine. The processor 1101 may include one or more processing cores, such as a quad-core processor or an octa-core processor. The processor 1101 may be implemented in at least one hardware form, including Digital Signal Processing (DSP), Field-Programmable Gate Array (FPGA), and Programmable Logic Array (PLA). The processor 1101 may also include a main processor and a coprocessor. The main processor is a processor used for processing data in an awake state, and is also known as a Central Processing Unit (CPU). The coprocessor is a low power processor used for processing data in a standby state.

In some embodiments, the processor 1101 is specifically configured to: obtain position information of the underwater cleaning robot relative to a base station; and determine the position of the underwater cleaning robot based on position information of a positioning sensor connected to the base station and the position information of the underwater cleaning robot relative to the base station.

Further, in some embodiments, the processor 1101 is also specifically configured to maintain clock synchronization between the at least two base stations via wireless communication.

Alternatively, the processor 1101 is also specifically configured to: send the synchronization command to the at least three base stations to maintain clock synchronization among the at least three base stations; obtain the distance difference between the underwater cleaning robot and each of the positioning sensors; and determine the position of the underwater cleaning robot based on the distance difference between the underwater cleaning robot and each of the positioning sensors and the position of each of the positioning sensors.

Alternatively, the processor 1101 is also specifically configured to: obtain a timestamp at which each of the positioning sensors respectively receives an underwater acoustic signal sent by the underwater cleaning robot or a timestamp at which the underwater cleaning robot receives an underwater acoustic signal sent by each of the positioning sensors; determine a time difference required for performing underwater acoustic communication between the underwater cleaning robot and each of the positioning sensors based on each of the timestamps obtained; and determine the distance difference between the underwater cleaning robot and each of the positioning sensors based on the time difference required for performing underwater acoustic communication between the underwater cleaning robot and each of the positioning sensors and underwater propagation speed of the underwater acoustic signal.

Alternatively, the processor 1101 is also specifically configured to: obtain position coordinates of each of the positioning sensors; and determine position coordinates or relative position coordinates of the underwater cleaning robot based on the distance difference between the underwater cleaning robot and each of the positioning sensors and the position of each of the positioning sensors by means of the TDOA model.

Alternatively, the processor 1101 is also specifically configured to: send the synchronization command to each of the base stations to maintain clock synchronization among the base stations; obtain the distance between the underwater cleaning robot and each of the positioning sensors; and determine the position of the underwater cleaning robot based on the distance between the underwater cleaning robot and each of the positioning sensors and the position of each of the positioning sensors.

Alternatively, the processor 1101 is also specifically configured to: obtain transmission time required for performing underwater communication between the underwater cleaning robot and each of the base stations; and determine the distance between the underwater cleaning robot and each of the positioning sensors based on the time required for performing underwater acoustic communication between the underwater cleaning robot and each of the base stations and the underwater propagation speed of an underwater acoustic signal.

Alternatively, the processor 1101 is also specifically configured to obtain transmission time based on communication between the underwater cleaning robot and each of the base stations, the communication carrying sending timestamp information and receiving timestamp information. (i) When the underwater cleaning robot synchronizes with each of the base stations: the underwater cleaning robot simultaneously sends a signal carrying a sending timestamp T1, and after receiving the signal, each of the base stations records a timestamp T2i received, i representing a base station code; or each of the base stations simultaneously sends a signal carrying a sending timestamp T1, and after receiving the signal, the underwater cleaning robot records a timestamp T2i received, i representing the base station code. Spatial transmission time between each of the base stations and the underwater cleaning robot is determined. (ii) When the underwater cleaning robot does not synchronize with each of the base stations: each of the base stations simultaneously sends a signal carrying the sending timestamp T1 to the underwater cleaning robot, after receiving the signal from each of the base stations, the underwater cleaning robot records the timestamp T2i received, i representing the base station code; the underwater cleaning robot simultaneously sends a signal carrying a sending timestamp T3 to each of the base stations, and each of the base stations respectively receives the signal sent by the underwater cleaning robot and records a timestamp T4i, i representing the base station code; or the underwater cleaning robot simultaneously sends a signal carrying the sending timestamp T1 to each of the base stations, and after receiving the signal sent by the underwater cleaning robot, each of the base stations records the timestamp T2i received, i representing the base station code; each of the base stations simultaneously sends a signal carrying the sending timestamp T3 to the underwater cleaning robot, and the underwater cleaning robot receives the signal sent by each of the base stations and records the timestamp T4i, i representing the base station code. Spatial transmission time between each of the base stations and the underwater cleaning robot is determined.

Alternatively, the processor 1101 is also specifically configured to: obtain position coordinates of each of the positioning sensors; and determine position coordinates of the underwater cleaning robot based on the distance between the underwater cleaning robot and each of the positioning sensors and the position of each of the positioning sensors by means of the TDOA model.

Alternatively, the processor 1101 is also specifically configured to: obtain depth coordinate values of each of the positioning sensors; determine two-dimensional coordinate values of each of the positioning sensors based on two-dimensional position coordinates of each of the base stations and a relative position between each of the base stations and the corresponding positioning sensor; and determine three-dimensional position coordinates of each of the positioning sensors based on the depth coordinate values of each of the positioning sensors and the two-dimensional coordinate values of each of the positioning sensors.

Alternatively, the processor 1101 is also specifically configured to: obtain spatial transmission delay between every two of the base stations; obtain a distance between every two of the base stations based on the spatial transmission delay and airborne propagation speed of the electromagnetic wave; and determine the two-dimensional coordinates of each of the base stations based on the distance between every two of the base stations, a two-dimensional coordinate system established for each of the base stations, and coordinates or reference coordinates of a certain base station.

Alternatively, the processor 1101 is also specifically configured to: (i) maintain clock synchronization for each of the base stations; and obtain the spatial transmission delay between every two of the base stations by means of timestamps for signal interaction between every two of the base stations; or (ii) obtain a timestamp T1 when a base station A sends an underwater acoustic signal to a base station B, a timestamp T2 when the base station B receives the underwater acoustic signal sent by the base station A, a timestamp T3 when the base station B sends the underwater acoustic signal to the base station A, and a timestamp T4 when the base station A receives the underwater acoustic signal sent by the base station B, and obtain spatial transmission delay between the base station A and the base station B; and similarly obtain spatial transmission delay between other every two of the base stations.

Alternatively, the processor 1101 is also specifically configured to: send the command to the underwater cleaning robot based on the position of the underwater cleaning robot, such that the underwater cleaning robot carries out path planning or changes an operating mode; or send the position of the underwater cleaning robot to the underwater cleaning robot, such that the underwater cleaning robot operates autonomously.

The memory 1102 may include one or more computer-readable storage media, which may be non-transient. The memory 1102 may also include a high-speed random access memory, and a non-volatile memory such as one or more disk storage terminals or flash storage terminals. In some embodiments of the present disclosure, the non-transient computer-readable storage media in the memory 1102 are used for storing at least one command executable by the processor 1101 to perform the method in the embodiments of the present disclosure.

In some embodiments, the control apparatus 1100 also includes a peripheral terminal interface 1103 and at least one peripheral control apparatus. The processor 1101, the memory 1102, and the peripheral terminal interface 1103 may be connected through a bus or signal line. Each peripheral control apparatus may be connected to the peripheral terminal interface 1103 through a bus, signal line, or circuit board. Specifically, the peripheral control apparatus includes at least one of a display screen 1104, a camera 1105, and an audio circuit 1106.

The peripheral terminal interface 1103 may be configured to connect at least one peripheral control apparatus related to input/output (I/O) to the processor 1101 and the memory 1102. In some embodiments of the present disclosure, the processor 1101, the memory 1102, and the peripheral terminal interface 1103 are integrated on the same chip or circuit board. In some other embodiments of the present disclosure, any one or two of the processor 1101, the memory 1102, and the peripheral terminal interface 1103 may be implemented on separate chips or circuit boards. The embodiments of the present disclosure do not impose restrictions on this.

The display screen 1104 is configured to display a user interface (UI). The UI may include graphics, texts, icons, videos, and any combination thereof. When the display screen 1104 is a touch screen, the display screen 1104 also is able to acquire a touch signal on or above a surface of the display screen 1104. The touch signal may be inputted as a control signal to the processor 1101 for processing. At this moment, the display screen 1104 may also be configured to provide virtual buttons and/or virtual keyboards, which are also referred to as soft buttons and/or soft keyboards. In some embodiments of the present disclosure, one display screen 1104 may be arranged on a front panel of the control apparatus 1100. In some other embodiments of the present disclosure, at least two display screens 1104 may be respectively arranged on different surfaces of the control apparatus 1100 or in a folded design. In some embodiments, the display screen 1104 may be a flexible display screen, which is arranged on a curved or folded surface of the control apparatus 1100. Even the display screen 1104 may be designed to be a non-rectangular irregular shape, i.e. a special-shaped screen. The display screen 1104 may be Liquid Crystal Display (LCD) or Organic Light-Emitting Diode (OLED), etc.

The camera 1105 is configured to capture images or videos. Alternatively, the camera 1105 includes a front camera and a rear camera. Generally, the front camera is arranged on the front panel of the control apparatus, and the rear camera is arranged on the rear panel of the control apparatus. In some embodiments, there are at least two rear cameras, which may be respectively a main camera, and any one of a depth of field camera, a wide-angle camera, and a telephoto camera, to achieve background blurring function based on fusion of the main camera and the depth of field camera, to achieve panoramic shooting and virtual reality (VR) shooting functions based on the fusion of the main camera and the wide-angle camera, or other fusion shooting functions. In some embodiments of the present disclosure, the camera 1105 may also include a flash lamp. The flash lamp may be a monochromatic temperature flash lamp or a bichromatic temperature flash lamp. The bichromatic temperature flash lamp refers to a combination of a warm light flash lamp and a cool light flash lamp, which may be used for light compensation at different color temperatures.

The audio circuit 1106 may include a microphone and a speaker. The microphone is configured to acquire sound waves from the users and the environment, and convert the sound waves into electrical signals inputted to the processor 1101 for processing. For the purpose of stereo acquisition or noise reduction, a plurality of microphones may be arranged in different locations of the control apparatus 1100. The microphones may also be array microphones or omnidirectional acquisition microphones.

A power supply 1107 is configured to supply power to various components in the control apparatus 1100. The power supply 1107 may be an AC battery, a DC battery, a disposable battery, or a rechargeable battery. When the power supply 1107 is the rechargeable battery, the rechargeable battery may be a wired rechargeable battery or a wireless rechargeable battery. The wired rechargeable battery is a battery charged through wired lines, and the wireless rechargeable battery is a battery charged through wireless coils. The rechargeable battery may also support fast charging technology.

The structural block diagram of the control apparatus shown in the embodiments of the present disclosure does not constitute a limitation on the control apparatus 1100. The control apparatus 1100 may include more or fewer components than shown in the figures, or combine some components, or adopt different component layouts.

In the present disclosure, terms "first", "second", etc. are merely for description purposes, and are not construed as indicating or implying relative importance or order; and the term "a plurality of" refers to two or more, unless otherwise specified. Terms "installation", "connected", "connection", and "fixed", etc. should be understood in a broad sense. For example, the "connection" may be a fixed connection, a detachable connection or integrated connection, a direct connection or indirect connection by means of an intermediary. The specific significations of the above terms in the present disclosure may be understood in the light of specific conditions by those of ordinary skills in the art.

In the description of the present disclosure, it is to be understood that the orientations or position relationships represented by the terms of "up", "down" and the like are based on the orientations or position relationships shown in the accompanying figures, they are merely for ease of a description of the present disclosure and a simplified description instead of being intended to indicate or imply the apparatus or unit to have a special orientation or to be configured and operated in a special orientation. Thus, they cannot be understood as limiting of the present disclosure.

The above is merely specific embodiments of the present disclosure, but the protection scope of the present disclosure is not limited thereto. Any variation or substitution easily conceivable to those skilled in the art shall fall into the protection scope of the present disclosure. Therefore, the equivalent variations made according to the claims of the present disclosure still fall within the scope of the present disclosure.

**Claims**

1. A positioning method for an underwater cleaning robot, wherein the positioning method comprises:

   obtaining position information of the underwater cleaning robot relative to a base station;
   determining a position of the underwater cleaning robot based on position information of a positioning sensor connected to the base station and the position information of the underwater cleaning robot relative to the base station.

2. The method according to claim 1, wherein at least two base stations are comprised; before obtaining the position information of the underwater cleaning robot relative to the base station, the method further comprises: controlling the at least two base stations to maintain clock synchronization.

3. The method according to claim 2, wherein controlling the at least two base stations to maintain clock synchronization comprises:

sending a synchronization command to the at least two base stations via wireless communication to maintain clock synchronization between the at least two base stations; or

sending the synchronization command to the at least two base stations via ultrasonic communication to maintain clock synchronization between the at least two base stations.

4. The method according to claim 2, wherein each of the base stations performs underwater communication with the underwater cleaning robot via the positioning sensor correspondingly connected thereto;

the position information of the underwater cleaning robot relative to the base station comprises a distance between the underwater cleaning robot and each of the positioning sensors, or a distance difference between the underwater cleaning robot and each of the positioning sensors.

5. The method according to claim 4, wherein each of the base stations is positioned on a water surface, and the positioning sensor connected to each of the base stations is positioned underwater;

each of the base stations is correspondingly connected to at least one of the positioning sensors, respectively;

the underwater communication comprises at least one of acoustic communication, optical signal communication, and electromagnetic communication.

6. The method according to claim 4, comprising:

sending a synchronization command to at least three of the base stations to maintain clock synchronization among the at least three base stations;

obtaining the distance difference between the underwater cleaning robot and each of the positioning sensors, when the position information of the underwater cleaning robot relative to the base station comprises the distance between the underwater cleaning robot and each of the positioning sensors;

determining the position of the underwater cleaning robot based on the distance difference between the underwater cleaning robot and each of the positioning sensors and a position of each of the positioning sensors.

7. The method according to claim 6, wherein obtaining the distance difference between the underwater cleaning robot and each of the positioning sensors comprises:

obtaining a timestamp at which each of the positioning sensors respectively receives an underwater acoustic signal sent by the underwater cleaning robot or a timestamp at which the underwater cleaning robot receives an underwater acoustic signal sent by each of the positioning sensors;

determining a time difference required for performing underwater acoustic communication between the underwater cleaning robot and each of the positioning sensors based on each of the timestamps obtained;

determining the distance difference between the underwater cleaning robot and each of the positioning sensors based on the time difference required for performing the underwater acoustic communication between the underwater cleaning robot and each of the positioning sensors and underwater propagation speed of the underwater acoustic signal.

8. The method according to claim 6, wherein determining the position of the underwater cleaning robot based on the distance difference between the underwater cleaning robot and each of the positioning sensors and the position of each of the positioning sensors comprises:

obtaining position coordinates of each of the positioning sensors;

determining position coordinates or relative position coordinates of the underwater cleaning robot based on the distance difference between the underwater cleaning robot and each of the positioning sensors and the position of each of the positioning sensors by means of a TDOA (Time Difference of Arrival) model.

9. The method according to claim 4, comprising:

sending a synchronization command to each of the base stations to maintain clock synchronization among each of the base stations;

obtaining the distance between the underwater cleaning robot and each of the positioning sensors; and

determining the position of the underwater cleaning robot based on the distance between the underwater cleaning robot and each of the positioning sensors and the position of each of the positioning sensors.

10. The method according to claim 9, wherein obtaining the distance between the underwater cleaning robot and each of the positioning sensors comprises:

obtaining transmission time required for performing underwater communication between the underwater cleaning robot and each of the base stations;
determining the distance between the underwater cleaning robot and each of the positioning sensors based on the time required for performing underwater acoustic communication between the underwater cleaning robot and each of the base stations and the underwater propagation speed of an underwater acoustic signal.

11. The method according to claim 10, wherein obtaining the transmission time required for performing underwater communication between the underwater cleaning robot and each of the base stations comprises:
obtaining transmission time based on communication between the underwater cleaning robot and each of the base stations, the communication carrying sending timestamp information and receiving timestamp information;

(i) when the underwater cleaning robot synchronizes with each of the base stations:

the underwater cleaning robot simultaneously sends a signal carrying a sending timestamp T1, and after receiving the signal, each of the base stations records a timestamp T2i received, i representing a base station code; or
each of the base stations simultaneously sends a signal carrying the sending timestamp T1, and after receiving the signal, the underwater cleaning robot records the timestamp T2i received, i representing the base station code;
determining spatial transmission time between each of the base stations and the underwater cleaning robot;

(ii) when the underwater cleaning robot does not synchronize with each of the base stations:

each of the base stations simultaneously sends the signal carrying the sending timestamp T1 to the underwater cleaning robot, after receiving the signal from each of the base stations, the underwater cleaning robot records the timestamp T2i received, i representing the base station code; the underwater cleaning robot simultaneously sends a signal carrying a sending timestamp T3 to each of the base stations, and each of the base stations respectively receives the signal sent by the underwater cleaning robot and records a timestamp T4i, i representing the base station code; or
the underwater cleaning robot simultaneously sends the signal carrying the sending timestamp T1 to each of the base stations, and after receiving the signal sent by the underwater cleaning robot, each of the base stations records the timestamp T2i received, i representing the base station code; each of the base stations simultaneously sends a signal carrying the sending timestamp T3 to the underwater cleaning robot, and the underwater cleaning robot receives the signal sent by each of the base stations and records the timestamp T4i, i representing the base station code;
determining the spatial transmission time between each of the base stations and the underwater cleaning robot.

12. The method according to claim 9, wherein determining the position of the underwater cleaning robot based on the distance between the underwater cleaning robot and each of the positioning sensors and the position of each of the positioning sensors comprises:

obtaining position coordinates of each of the positioning sensors;
determining position coordinates of the underwater cleaning robot based on the distance between the underwater cleaning robot and each of the positioning sensors and the position of each of the positioning sensors by means of a TOA (Time of Arrival) model.

13. The method according to claim 8 or 12, wherein obtaining the position coordinates of each of the positioning sensors comprises:

obtaining depth coordinate values of each of the positioning sensors;
determining two-dimensional coordinate values of each of the positioning sensors based on two-dimensional position coordinates of each of the base stations and a relative position between each of the base stations and the corresponding positioning sensor;
determining three-dimensional position coordinates of each of the positioning sensors based on the depth coordinate values of each of the positioning sensors and the two-dimensional coordinate values of each of the positioning sensors.

14. The method according to claim 13, wherein two-dimensional coordinates of each of the base stations are determined before each of the base stations achieves clock synchronization, or the two-dimensional coordinates of each of the base stations are determined after each of the base stations achieves clock synchronization.

15. The method according to claim 13, wherein obtaining the two-dimensional position coordinates of each of the base stations comprises:

obtaining spatial transmission delay between every two of the base stations;
obtaining a distance between every two of the base stations based on the spatial transmission delay and airborne propagation speed of an electromagnetic wave;
determining the two-dimensional coordinates of each of the base stations based on the distance between every two of the base stations, a two-dimensional coordinate system established for each of the base stations, and coordinates or reference coordinates of a certain base station.

16. The method according to claim 15, wherein obtaining the spatial transmission delay between every two of the base stations comprises:

(i) maintaining clock synchronization for each of the base stations;
obtaining the spatial transmission delay between every two of the base stations by means of timestamps for signal interaction between every two of the base stations; or
(ii) obtaining a timestamp T1 when a base station A sends an underwater acoustic signal to a base station B, a timestamp T2 when the base station B receives the underwater acoustic signal sent by the base station A, a timestamp T3 when the base station B sends the underwater acoustic signal to the base station A, and a timestamp T4 when the base station A receives the underwater acoustic signal sent by the base station B, and obtaining spatial transmission delay between the base station A and the base station B; and similarly obtaining spatial transmission delay between other every two of the base stations.

17. The method according to claim 1, wherein the positioning sensor is an underwater acoustic sensor; the underwater cleaning robot is connected to the underwater acoustic sensor; and the underwater cleaning robot communicates with the base station via an underwater acoustic signal by means of the underwater acoustic sensor.

18. A control method for an underwater cleaning robot, wherein the control method comprises:

obtaining a position of the underwater cleaning robot by using the method according to any one of claims 1 to 17;
sending a command to the underwater cleaning robot based on the position of the underwater cleaning robot, such that the underwater cleaning robot carries out path planning or changes an operating mode; or
sending the position of the underwater cleaning robot to the underwater cleaning robot, such that the underwater cleaning robot operates autonomously.

19. A positioning system for an underwater cleaning robot, wherein the positioning system comprises:

a base station;
a positioning sensor connected to the base station; and
a controller communicatively connected to the base station, the controller being configured to perform the positioning method for an underwater cleaning robot according to any one of claims 1 to 17.

20. The positioning system according to claim 19, further comprising:

at least two base stations or at least three base stations, each of the base stations being positioned on a water surface, each of the base stations being connected to a corresponding positioning sensor located underwater; and
a controller communicatively connected to each of the base stations, the controller being configured to obtain the position information of the underwater cleaning robot relative to each of the base stations, and determine the position of the underwater cleaning robot based on the position information of the positioning sensor connected to the base station and the position information of the underwater cleaning robot relative to the base station.

21. A control apparatus comprising a memory, a processor, and a computer program stored in the memory and executable on the processor, wherein the computer program, when executed by a processor, causes the processor to perform the positioning method for an underwater cleaning robot as claimed in any one of claims 1 to 18.

22. A computer-readable storage medium, wherein the computer-readable storage medium stores a computer program which, when executed by a processor, causes the processor to perform the positioning method for an underwater cleaning robot as claimed in any one of claims 1 to 18.

FIG. 1

| | |
|---|---|
| Obtain position information of the underwater cleaning robot relative to a base station | S201 |
| Determine a position of the underwater cleaning robot based on position information of a positioning sensor connected to the base station and the position information of the underwater cleaning robot relative to the base station | S202 |

FIG. 2

| | |
|---|---|
| Send a synchronization command to at least three base stations to maintain clock synchronization among the at least three base stations | S301 |
| Obtain a distance difference between the underwater cleaning robot and each of the positioning sensors | S302 |
| Determine the position of the underwater cleaning robot based on the distance difference between the underwater cleaning robot and each of the positioning sensors and a position of each of the positioning sensors | S303 |

FIG. 3

| Send a synchronization command to each of the base stations to maintain clock synchronization among each of the base stations | ⌒ S401 |

↓

| Obtain a distance between the underwater cleaning robot and each of the positioning sensors | ⌒ S402 |

↓

| Determine the position of the underwater cleaning robot based on the distance between the underwater cleaning robot and each of the positioning sensors and the position of each of the positioning sensors | ⌒ S403 |

FIG. 4

First Base Station

Second Base Station

$T1$

$T2$

$T3$

$T4$

FIG. 5

First Base Station $(0,0)$

$R_{12}$

Second Base Station $(x2,0)$

$R_{13}$

$R_{23}$

$(x3,y3)$   Third Base Station

FIG. 6

FIG. 7

Underwater
Cleaning
Robot $(\boldsymbol{x}, \boldsymbol{y}, \boldsymbol{z})$

First Base
Station $(\boldsymbol{x}_1, \boldsymbol{y}_1, \boldsymbol{z}_1)$

$\boldsymbol{R}_1$

Fourth
Base
Station $(\boldsymbol{x}_4, \boldsymbol{y}_4, \boldsymbol{z}_4)$

$\boldsymbol{R}_4$

Second
Base
Station
$(\boldsymbol{x}_2, \boldsymbol{y}_2, \boldsymbol{z}_2)$

$\boldsymbol{R}_2$

$\boldsymbol{R}_3$

Third Base
Station
$(\boldsymbol{x}_3, \boldsymbol{y}_3, \boldsymbol{z}_3)$

FIG. 8

First Base
Station $_{(\boldsymbol{x}_1, \boldsymbol{y}_1, \boldsymbol{z}_1)}$

Underwater
Cleaning
Robot $^{(\boldsymbol{x}, \boldsymbol{y}, \boldsymbol{z})}$

$\boldsymbol{R}_1$

Third Base
Station
$(\boldsymbol{x}_3, \boldsymbol{y}_3, \boldsymbol{z}_3)$

$\boldsymbol{R}_3$

$\boldsymbol{R}_2$

Second
Base
Station $(\boldsymbol{x}_2, \boldsymbol{y}_2, \boldsymbol{z}_2)$

FIG. 9

Positioning System For
Underwater Cleaning
Robot 100

Controller — 101

Base
Station — 102

Positioning
Sensor — 104

FIG. 10

Control Apparatus 1100

1103

Peripheral Device Interface

1101 — Processor

1102 — Memory

Display
Screen — 1104

Camera — 1105

Audio Circuit — 1106

Power Supply — 1107

FIG. 11

## INTERNATIONAL SEARCH REPORT

| International application No. |
|---|
| **PCT/CN2023/133042** |

### A. CLASSIFICATION OF SUBJECT MATTER

G01S 5/22(2006.01)i

According to International Patent Classification (IPC) or to both national classification and IPC

### B. FIELDS SEARCHED

Minimum documentation searched (classification system followed by classification symbols)

IPC: G01S

Documentation searched other than minimum documentation to the extent that such documents are included in the fields searched

Electronic data base consulted during the international search (name of data base and, where practicable, search terms used)

CNTXT, CNABS, CNKI, ENTXT: 定位, 机器人, 水下, 标签, 基站, 距离, 位置, 时间差, 同步, underwater, robot, position, base station, label, TDOA, TOA

### C. DOCUMENTS CONSIDERED TO BE RELEVANT

| Category* | Citation of document, with indication, where appropriate, of the relevant passages | Relevant to claim No. |
|---|---|---|
| PX | CN 116125388 A (TIANJIN WANGYUAN INTELLIGENT TECHNOLOGY CO., LTD.) 16 May 2023 (2023-05-16) description, paragraphs 5-160, and figures 1-11 | 1-22 |
| X | CN 115097382 A (SHENZHEN NABAI INFORMATION TECHNOLOGY CO., LTD.) 23 September 2022 (2022-09-23) description, paragraphs 22-50, and figures 1-3 | 1-22 |
| X | CN 107655480 A (SHENZHEN DEPTHLINK TECHNOLOGY CO., LTD.) 02 February 2018 (2018-02-02) description, paragraphs 39-85, and figures 1-3 | 1-22 |
| X | US 2020206921 A1 (UBTECH ROBOTICS CORP.) 02 July 2020 (2020-07-02) description, paragraphs 11-57, and figures 1-5 | 1-22 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 January 2024** | **29 January 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/133042**

| Patent document cited in search report | | | Publication date (day/month/year) | Patent family member(s) | | | Publication date (day/month/year) |
|---|---|---|---|---|---|---|---|
| CN | 116125388 | A | 16 May 2023 | None | | | |
| CN | 115097382 | A | 23 September 2022 | None | | | |
| CN | 107655480 | A | 02 February 2018 | None | | | |
| US | 2020206921 | A1 | 02 July 2020 | US | 11126198 | B2 | 21 September 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023102312577